# EUROPEAN PATENT SPECIFICATION

(11) **EP 3 860 079 B1**
(45) Date of publication and mention of the grant of the patent: **24.01.2024**
(21) Application number: 20154874.0
(22) Date of filing: 31.01.2020
(51) Int. Cl.: H04L 9/40, G06N 20/00, H04L 41/0866, G06N 5/047, H04L 41/16, H04L 43/045, H04L 43/0817, H04L 43/50

(54) **METHOD AND SYSTEM FOR A SECURE AND VALID CONFIGURATION OF NETWORK ELEMENTS**
VERFAHREN UND SYSTEM ZUR SICHEREN UND GÜLTIGEN KONFIGURATION VON NETZWERKELEMENTEN
PROCÉDÉ ET SYSTÈME POUR UNE CONFIGURATION SÉCURISÉE ET VALIDE D'ÉLÉMENTS DE RÉSEAU

(43) Date of publication of application: 04.08.2021
(73) Proprietor: Deutsche Telekom AG, 53113 Bonn (DE)
(72) Inventor: POJDA, Jakob, 53757 Sankt Augustin (DE); DITTRICH, Sebastian, 53175 Bonn (DE)
(74) Representative: RDL Patentanwälte PartG mbB

(56) References cited:
- WO-A1-2018/138793
- US-A1- 2016 218 933
- ZOLANVARI MAEDE ET AL: "Machine Learning-Based Network Vulnerability Analysis of Industrial Internet of Things", IEEE INTERNET OF THINGS JOURNAL, IEEE, USA, vol. 6, no. 4, 1 August 2019 (2019-08-01), pages 6822-6834, XP011737503, DOI: 10.1109/JIOT.2019.2912022 [retrieved on 2019-07-31]
- BEAVER JUSTIN M ET AL: "An Evaluation of Machine Learning Methods to Detect Malicious SCADA Communications", 2013 12TH INTERNATIONAL CONFERENCE ON MACHINE LEARNING AND APPLICATIONS, IEEE, vol. 2, 4 December 2013 (2013-12-04), pages 54-59, XP032586543, DOI: 10.1109/ICMLA.2013.105 [retrieved on 2014-04-09]

## Description

The present invention refers to a method and a system for a secure and valid configuration of network elements of a communications network. Further, the invention discloses a respective computer program product.

In the daily communications network operation of the Internet backbone and WDM (Wavelength Division Multiplexing) network, administrators or machines configure telecommunications routers on a daily basis using configurations commands. Since the current legal situation considers this to be a critical infrastructure, special attention and caution is required here. A failure can be caused unnoticed by internal offenders if they execute a chain of configurations commands that are legitimate for their rights but damaging for the communications network.

This problem is most apparent when, for cost reasons, no second pair of eyes validates the configurations commands.

The document "Machine Learning-Based Network Vulnerability Analysis of Industrial Internet of Things" of Zolanvari Maede et al. refers to a ML-based anomaly detection system for the Internet of Things technology in industrial control systems (ICS).

US 2016/0218933 A1 refers to a network management system that performs an impact analysis of actual or hypothetical network commands which are provided as voice inputs of a user, and presents the impact analysis results to facilitate the user's understanding of the predicted consequences of the actual or hypothetical commands on network operations, management, or security.

To date, there is no automated procedure for checking configurations commands to prevent offenders from sending configurations commands that are technically and organizationally valid but malicious or destructive.

As a solution, the present disclosure provides a method and a system with the features of the independent claims. Advantageous embodiments can be found in the dependent claims and the following description.

A system for a secure and valid configuration of network elements of a communications network is provided, the system comprising at least one configuration verifier layer which is installed and sandwiched between a user layer of the communications network and the network elements and which is in operative conjunction with the user layer and configured to evaluate configurations commands for the network elements, the configurations commands being supplied via the user layer, wherein the evaluation is performed using an artificial intelligence which is implemented on and executed by at least one computing device which is in operative conjunction with and accessible to the configuration verifier layer.

Within the scope of the present disclosure, the terms "configuration command" and "configurations command" shall have the same meaning. Further, the terms "communication network" and "communications network" have the same meaning herein.

The user layer is realized by and/or comprises at least one interface which allows to enter (i.e. to input) configurations commands for the network elements. According to one embodiment the at least one interface is a user interface, particularly a human machine interface (HMI) and/or a machine-to-machine interface (M2M). The user layer can comprise both, at least one human machine interface (HMI) and at least one machine-to-machine interface (M2M).

The configuration verifier layer also comprises one or more interfaces which allow an interaction with the user layer on the one hand and with the network elements on the other hand. Furthermore, according to one embodiment, the configuration verifier layer comprises the artificial intelligence which is implemented on and executed by the at least one computing device, i.e. the configuration verifier layer comprises the at least one computing device with the artificial intelligence. The at least one computing device with the artificial intelligence can also be separate from the configuration verifier layer, but the configuration verifier layer is in operative conjunction with the artificial intelligence in any case.

Thus, according to the present invention, as a solution to the problems mentioned in the introductory part, a control layer, i.e. the configuration verifier layer is established between the users of a system, i.e. of the communications network, such as system administrators (humans) and/or machines (M2M-machine-to-machine), and routers, i.e. the network elements, which evaluates the configurations commands with artificial intelligence (Al) behind them. If a series of configurations commands is not malicious or destructive, the system, i.e. the communications network will execute them. If the series/chain of configurations commands is highly likely to be malicious, a human authorization is required for release via the user layer. Such human authorization can be automatically requested by the artificial intelligence via the configuration verifier layer and the user layer, and respective interfaces of those layers.

The artificial intelligence, which is supposed to decide whether a configurations command and/or a series of configurations commands is malicious or destructive or not, has various abstraction methods with which it can map a state of the communications network both before and after the respective configurations command (and/or the series of configurations commands) has been issued, in order to be able to make a decision based on this, i.e. based on a comparison between the state of the communications network before the respective communications command (and/or the respective series of configurations commands) has been issued and the state of the communications network after the respective communications command (and/or the respective series of configurations commands) has been issued. Thus, previously issued configurations commands also play a role, because the AI must have a memory.

There are two different techniques which are proposed to be used to detect a critical configurations command and/or a critical chain/series of configurations commands. However, the proposed method and system are not limited to only these two techniques, further techniques are possible.

A first technique is based on a behavioural analysis.

Herein, the analysis/evaluation uses a threshold or rule based heuristics. In other word, according to one possible embodiment of the proposed system, the artificial intelligence is set up and configured to act on a given set of rules/parameters which is stored in and retrievable from at least one database. The at least one database may be a component of the proposed system. The at least one database is at least in operative conjunction with the configuration verifier layer and/or the artificial intelligence (i.e. the at least one computing device implementing and executing the artificial intelligence) of the proposed system.

According to one aspect, the rules are gained from configurations commands which have been executed in daily routine of operation and during routine maintenance of the network elements (before the respective current configurations commands which are to be evaluated have been issued) and/or which have been identified beforehand as forbidden/critical configurations commands.

Herein it is possible that the configurations commands are blocked and/or sent for verification via the user layer to an administrator if the configurations commands violate at least one of the rules or if such violations exceed a pre-set limit/threshold.

That means that a security system (i.e. the artificial intelligence) in the background of the configuration verifier layer is firmly described by means of certain parameters. It is trained on configurations commands that are executed in everyday life and maintenance and on a normal state of a current configuration (of the network elements). It is also trained for configurations commands that should not be executed, i.e. that are known as forbidden or critical configurations commands. New configurations commands that have never been executed before also belong to a critical category. This makes it possible to detect command violations that could indicate manipulation onto the communications network. If the violations exceed a limit or a rule, the respective configurations command is prevented or sent for verification. If new configurations commands result in findings about potential attack scenarios, these can also be stored as rules.

Further, according to still a further embodiment of the proposed system, it may be provided that the artificial intelligence is based on machine learning wherein a data model is designed which corresponds to a basic configuration of the network elements and which is dynamically trained by daily routine of operation and routine maintenance of the network elements.

Machine Learning is also a dynamic approach to the solution. Thereby, a data model must be designed, which corresponds to a basic state of the communications network. From there, maintenance work and the basic configuration of the network equipment (e.g. of the network elements) are trained. The rules described above would also apply. The advantage of machine learning is the dynamic learning effect which is not mapped by existing rules.

A second technique is based on sandboxing.

A sandbox is an isolated area where software can be run without having access to an actual system environment, here to the communications network, particularly to its network elements. The sandbox is separated from resources of the system, i.e. the communications network, and provides the software to be executed with a special runtime environment, i.e. an isolated environment. The isolated environment can be used to test software, to further analyse the effects and functionality of malware, or to protect operating systems (i.e. the communications network) from being influenced by applications. A virtualization of computers and services can also be mapped using sandboxes. Technically, there are various possibilities for implementing sandboxes. As a rule, the performance of software executed in the protected environment (i.e. in the isolated environment) is lower than in conventional environments. A sandbox provides the software to be executed with all necessary functions. For the guest software, the isolated environment appears like a normal, unprotected operating system environment. There are many advantages of running software in a protected environment. These are, for example:
- better control of the environment and the software running in it,
- the software cannot access or change resources of the basic system (here the communications network and its network elements) unnoticed,
- no changes are made to central registry databases (of the communications network),
- programs running simultaneously in different protected environments do not influence each other,
- data access to the host system, i.e. to the communications network, is blocked
- conflicts between operating system, i.e. the communications network, and software can be avoided by providing the protected environment,
- protect the underlying computer system, i.e. the communications network and its network elements,
- protect the operating system, i.e. the communications network and its network elements, against manipulation.

Therefore, according to a further embodiment of the proposed system, the artificial intelligence is configured to display and analyse a network status of the network elements at any time using currently available data which are stored on and retrievable from a database wherein an isolated test platform (corresponding to the before mentioned isolated environment) simulating the network elements and its network surroundings is provided and the configurations commands which have been supplied using the user layer are initially executed on the isolated test platform to determine its effect on the state of the isolated test platform and the result is reported back to the configuration verifier layer. The database may be a component of the proposed system. The database is at least accessible to the configuration verifier layer and/or to the artificial intelligence, i.e. to the at least one computing device implementing and executing the artificial intelligence. The at least one computing device implementing and executing the artificial intelligence may be a component of the proposed system. The at least one computing device implementing and executing the artificial intelligence is at least accessible to the configuration verifier layer.

According to still a further embodiment of the proposed system, the isolated test platform is implemented in virtualized form.

According to the sandboxing technique, the configuration verifier layer accesses a backend system (i.e. the at least one computing device with the artificial intelligence) that is able to display and analyse a communications network status of the affected network elements at any time using available data.

An entered configurations command or chain of configurations commands is initially executed on the isolated test platform to determine its effect on the state of the isolated test platform. The result is reported back to the configuration verifier layer. The isolated test platform is advantageously implemented in virtualized form. The isolated test platform can also be designated as an isolated simulation platform.

A combination of the first technique and the second technique is possible.

Further, the present invention refers to a computer-implemented method for a secure and valid configuration of network elements of a communications network, the method comprising at least the following steps:
- providing a configuration verifier layer which is installed and sandwiched between a user layer of the communications network and the network elements of the communications network and which is in communicative conjunction with the user layer and configured to evaluate configurations commands for the network elements,
- providing an artificial intelligence which is in operative conjunction with and accessible to the configuration verifier layer,
- supplying and receiving the configurations commands via the user layer,
- evaluating the configurations commands by the configuration verifier layer using the artificial intelligence.

According to a possible embodiment of the proposed method, the artificial intelligence is set up and configured to act on a given set of rules/parameters.

The terms "in operative conjunction", "in communicative conjunction", "in communicative connection" and "in operative connection" are used synonymously herein.

According to a further possible embodiment of the proposed method, the rules are gained from configurations commands which have been executed in daily routine of operation and during routine maintenance of the network elements (before the respective current configurations commands which are to be evaluated have been issued) and/or which have been identified beforehand as forbidden/critical configurations commands.

According to a still further possible embodiment of the proposed method, the configurations commands are blocked and/or sent for verification via the user layer to an administrator if the configurations commands violate at least one of the rules or if such violations exceed a pre-set limit/threshold.

If new configurations commands result in findings about potential attack scenarios, these are stored as rules in a database of the communications network or in a database that is separate to but accessible to the communications network.

According to one aspect of the proposed method, the artificial intelligence is based on machine learning wherein a data model is designed which corresponds to a basic configuration of the network elements and which is dynamically trained by daily routine of operation and routine maintenance of the network elements.

The present disclosure also refers to a computer program product for a secure and valid configuration of network elements of a communications network, the computer program product comprises computer executable codes stored on a computer-readable storage medium functionally coupled to at least one computing device and causes the at least one computing device to perform a computing process when the at least one computing device is in operation, the computing process comprises the steps of:
- providing a configuration verifier layer which is installed and sandwiched between a user layer of the communications network and the network elements of the communications network and which is in communicative conjunction with the user layer and configured to evaluate configurations commands for the network elements,
- providing an artificial intelligence which is in operative conjunction with and accessible to the configuration verifier layer,
- receiving the configurations commands via the user layer,
- evaluating the configurations commands by the configuration verifier layer using the artificial intelligence.

The user layer may include or may be in communication with one or more input units, such as a touch screen, an audio input, a movement input, a mouse, a keypad input and/or the like. Further, the user layer may include or may be in communication with one or more output devices, such as an audio output, a video output, screen/display output, and/or the like.

The at least one computing device implementing and executing the artificial intelligence may be the same computing device which provides (realizes) the configuration verifier layer. According to a further embodiment, the at least one computing device implementing and executing the artificial intelligence may be separate from the at least one computing device which provides the configuration verifier layer. It is to be understood that all steps of the above mentioned computing process which are executed with the aid of the at least one computing device are all executed with one and the same computing device (processor), each step is executed with a respective computing device (processor) intended for that step, or respective groups of steps are executed with a respective computing device (processor).

Embodiments of the invention may be used with or incorporated in a computer system that may be a standalone unit or include one or more remote terminals or devices in communication with a central computer, located, for example, in a cloud, via a network such as, for example, the Internet or an intranet. As such, the communications network described herein and related components may be a portion of a local computer system or a remote computer or an online system or a combination thereof. The database and software described herein may be stored in computer internal memory or in a non-transitory computer readable medium.

All components of the proposed system are in communicative connection, also called operative conjunction, with each other, i.e. they are networked with each other. Such communicative connection may be a direct connection or an indirect connection. Each communicative connection may be a wired or a wireless connection. Each suitable communication technology may be used. The different components of the system, such as the at least one computing device and the database, each may include one or more (communications) interfaces for communicating with each other. Such communication may be executed using a wired data transmission protocol, such as fiber distributed data interface (FDDI), digital subscriber line (DSL), Ethernet, asynchronous transfer mode (ATM), or any other wired transmission protocol. Alternatively, the communication may be wirelessly via wireless communication networks using any of a variety of protocols, such as General Packet Radio Service (GPRS), Universal Mobile Telecommunications System (UMTS), Code Division Multiple Access (CDMA), Long Term Evolution (LTE), wireless Universal Serial Bus (USB), and/or any other wireless protocol. The respective communication may be a combination of a wireless and a wired communication.

According to one embodiment, a comparison of the configurations commands which are to be evaluated, is made with stored historical data or training data, and those configurations commands are filtered which would lead to configurations of the network elements that have caused problems in the past or have been identified as potentially malicious or destructive.

Further, unknown configurations commands could, for example, first be marked by the configuration verifier layer (in cooperation with the artificial intelligence) and tested by the proposed isolated test platform and only be released or rejected after the test. In addition, empirical values with configurations commands and the resulting configurations in test operation or running operation can be reported back to the configuration verifier layer and optionally via the user layer (i.e. via a respective interface provided by the user layer) to an administrator.

It is conceivable that only individual configurations commands or even combinations of configurations commands may be malicious or destructive. I.e. each configurations command alone is harmless, but the combination of two or more configurations commands is at least potentially harmful. In this case, the configuration verifier layer checks not only the configurations command itself but also potential collisions with configurations commands that have already been implemented.

Further aspects of the invention will be realized and attained by means of the elements and combinations particularly depicted in the appended claims. It is to be understood that both, the foregoing general description and the following detailed description are exemplary and explanatory only and are not restrictive of the invention as described.

### Brief description of the drawings

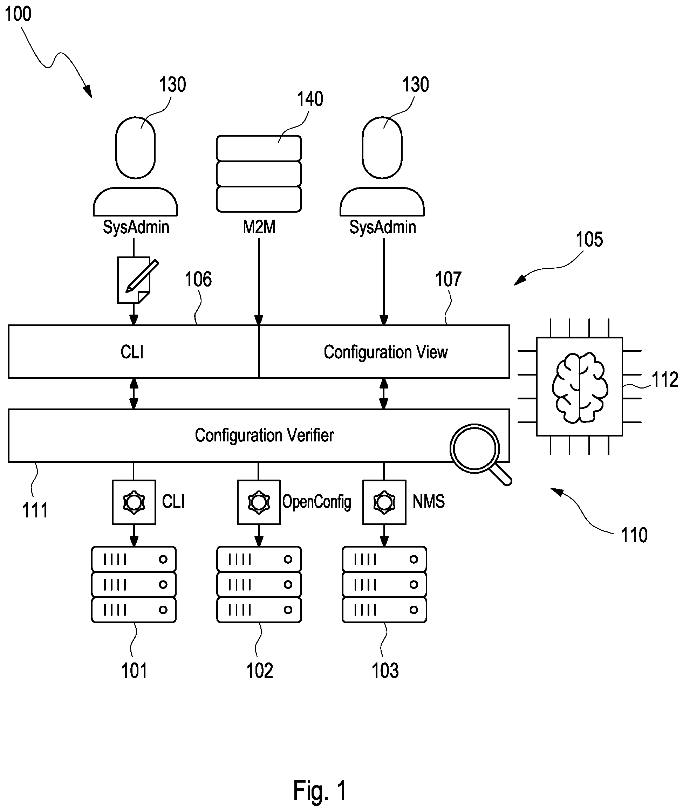

Fig. 1 shows a schematic sectional view at a communications network with network elements which are in operative conjunction with an embodiment of the proposed system.

### Detailed description of the drawings

Figure 1 shows a schematic sectional view at a communications network 100 with network elements 101, 102, 103. The communications network 100 further comprises a user layer 105. Further, a system 110 for a secure and valid configuration of the network elements 101, 102, 103 of the communications network 100 is shown. The system 110 comprises at least one configuration verifier layer 111 which is installed and sandwiched between the user layer 105 and the network elements 101, 102, 103 and which is configured to evaluate configurations commands for the network elements 101, 102, 103. The at least one configuration verifier layer 111 is in operative conjunction with an artificial intelligence 112. The artificial intelligence 112 is implemented and executed on a computing device (not shown here) which is in communicative connection with the configuration verifier layer 111. The configurations commands are supplied and received via the user layer 105. The user layer 105 comprises interfaces 106, 107 which enable remote entities 130, 140 to access the communications network 100 and to exchange data with the communications network 100, at least to input, i.e. to supply configurations commands to the communications network 100. The interface 106 may be a command-line interface (CLI) which allows a system administrator 130 to input configurations commands, i.e. at least one configuration command. The network elements 101, 102, 103 are configured by system administrators 130 and provisioning systems (M2M) 140. Configuration templates can be developed and tested by operation according to the dual control principle via a further interface 107 which may be defined as a configuration view.

Two techniques are used to detect a critical configurations command and/or a critical chain of configurations commands:

### 1. simulation of the communications network 100 (sandboxing)

The configuration verifier layer 111 accesses the artificial intelligence 112 as a backend system 112 that is able to display and analyse a network status of the affected network elements 101, 102, 103 at any time using available data which are retrievable from the communications network 100. Such available data can be captured automatically during operation of the communications network 100 and stored in a database which is accessible to the artificial intelligence 112.

A remote configurations command or a chain of configurations commands could initially be executed on an isolated test platform to determine its effect on the state of the isolated test platform. A result of such simulated state is reported back to the configuration verifier layer 111 and can be displayed to a user, e.g. to a system administrator 130, via the interface 107 which provides a configuration view. The isolated test platform will most likely be implemented in virtualized form.

### 2. behaviour-based analysis

### A (Threshold/Rule Based Heuristics)

The artificial intelligence 112 in the background of the configuration verifier layer 111 is firmly described by means of certain parameters. It is trained on configurations commands that are executed in everyday life and maintenance and on a normal state of a current configuration of the network elements 101, 102, 103. It is also trained for configurations commands that should not be executed. New configurations commands that have never been executed before also belong to a critical category. This makes it possible to detect command violations that could indicate manipulation onto the communications network 100. If the violations exceed a pre-given limit or a pre-given rule, the configurations command is prevented or sent for verification via the configuration verifier layer 111 and the interface 107. If new tests result in findings about attack scenarios, these can also be stored as rules in a respective database. The pre-given limit and the pre-given rule are stored in a database which is accessible to the artificial intelligence 112, i.e. to the at least one computing device implementing and executing the artificial intelligence 112.

### B (Machine Learning)

Machine Learning is also a dynamic approach to the solution. A data model must be designed, which corresponds to a basic state of the communications network 100. From there, maintenance work and the basic configuration of the network equipment, e.g. the network elements 101, 102, 103, could be trained. The rules described above would also apply. The advantage would be the dynamic learning effect which is not mapped by existing rules.

A combination of both methods would also be conceivable.

The evaluation of the configurations commands is performed using the artificial intelligence 112 which is in operative conjunction with and accessible to the configuration verifier layer 111. The artificial intelligence 112, e.g. machine learning, is used to assess the configuration, i.e. the configurations commands. Templates filled by any one of the remote entities 130, 140 are checked by the artificial intelligence 112 for critical actions. Command sequences via CLI 106 are also checked (dual control principle for an action initiated by the remote entities 130, 140).

The proposed system 110 which comprises the configuration verifier layer 111 and the artificial intelligence 112 can be part of the communications network 100 or can be separate from the communications network 100, but being in operative conjunction with the communications network 100.

Network elements 101, 102, 103 receive their valid configuration, i.e. their valid configurations commands from the configuration verifier layer 111 via open standards or interfaces if possible, such as OpenConfig, T-API (Telephony Application Programming Interface), or via EMS (Element Management System)/NMS (Network Management System) as indicated by respective arrows.

### List of reference signs

- 100: communications network
- 110: system
- 101: network element
- 102: network element
- 103: network element
- 105: user layer
- 106: interface
- 107: interface
- 111: configuration verifier layer
- 112: artificial intelligence
- 130: remote entity, system administrator SysAdmin
- 140: remote entity, M2M

## Claims

1. A system (110) for a secure and valid configuration of network elements (101, 102, 103) of a communications network (100), the system (110) comprising an artificial intelligence (112) and at least one configuration verifier layer (111) which is configured to be installed and sandwiched between a user layer (105) of the communications network (100) and the network elements (101, 102, 103) of the communications network (100) and which is configured to evaluate one or more configurations commands for the network elements (101, 102, 103), the one or more configurations commands being supplied via the user layer (105) and comprising known and new configurations commands wherein the user layer comprises at least one human machine interface (130) and at least one machine-to-machine interface (140) and wherein the evaluation is performed using the artificial intelligence (112) which is implemented and executed by at least one computing device and in operative conjunction with and accessible to the configuration verifier layer (111) wherein the artificial intelligence (112) is based on machine learning wherein a data model is designed which corresponds to a basic configuration of the network elements (101, 102, 103) and which is dynamically trained by daily routine of operation and routine maintenance of the network elements (101, 102, 103) wherein the artificial intelligence is configured to decide whether a configurations command and/or a series of configurations commands is malicious or destructive or not, and to map a state of the communications network both before and after the respective configurations command and/or the series of configurations commands has been issued, in order to be able to make a decision based on a comparison between the state of the communications network before the respective configurations command and/or the respective series of configurations commands has been issued and the state of the communications network after the respective configurations command and/or the respective series of configurations commands has been issued wherein the configuration verifier layer (111) is configured to not only check a respective one of the one or more configurations commands itself, but also checks combinations of two or more configurations commands where each configurations command alone is harmless, wherein, if one or more configurations commands are malicious, the artificial intelligence (112) automatically requests a human authority via the configuration verifier layer and the user layer.

2. The system according to claim 1 wherein the artificial intelligence (112) is set up and configured to act on a given set of rules/parameters which is stored in and retrievable from a database.

3. The system according to claim 2 wherein the rules are gained from configuration commands which have been executed in daily routine of operation and during routine maintenance of the network elements (101, 102, 103) and/or which have been identified beforehand as forbidden configuration commands and/or critical configuration commands.

4. The system according to claim 2 or 3 wherein the configuration verifier layer (111) is further configured to block and/or sent at least one of the one or more configurations commands for verification via the user layer (105) to an administrator (130) if at least one of the one or more configurations commands violates at least one of the rules and/or if such violation exceeds a pre-set limit.

5. The system according to any one of claims 2 to 4 wherein, if one or more new configurations commands result in findings about potential attack scenarios, these one or more new configurations commands can also be stored as rules in the database.

6. The system according to any one of the preceding claims wherein the artificial intelligence (112) is configured to display and analyse a network status of the network elements (101, 102, 103) at any time using currently available data wherein an isolated test platform simulating the network elements (101, 102, 103) and its network surroundings is provided and the one or more configurations commands which have been supplied and received using the user layer (105) are initially executed on the isolated test platform to determine its effect on the state of the isolated test platform and the result is reported back to the configuration verifier layer (111) and optionally made visible to an administrator (130) via the user layer (105).

7. The system according to claim 6 wherein the test platform is implemented in virtualized form.

8. A computer-implemented method for a secure and valid configuration of network elements (101, 102, 103) of a communications network (100), the method comprising at least the following steps:
- providing a configuration verifier layer (111) which is installed and sandwiched between a user layer (105) and the network elements (101, 102, 103) of the communications network (100) and which is in communicative conjunction with the user layer (105) and configured to evaluate one or more configurations commands for the network elements (101, 102, 103) wherein the one or more configurations commands comprising known and new configurations commands,
- providing an artificial intelligence (112) which is in operative conjunction with and accessible to the configuration verifier layer (111), wherein the artificial intelligence (112) is based on machine learning wherein a data model is designed which corresponds to a basic configuration of the network elements (101, 102, 103) and which is dynamically trained by daily routine of operation and routine maintenance of the network elements (101, 102, 103), wherein the artificial intelligence is configured to decide whether a configurations command and/or a series of configurations commands is malicious or destructive or not, and to map a state of the communications network both before and after the respective configurations command and/or the series of configurations commands has been issued, in order to be able to make a decision based on a comparison between the state of the communications network before the respective configurations command and/or the respective series of configurations commands has been issued and the state of the communications network after the respective configurations command and/or the respective series of configurations commands has been issued,
- supplying and receiving the one or more configurations commands via the user layer (105), wherein the user layer comprises at least one human machine interface (130) and at least one machine-to-machine interface (140),
- evaluating the one or more configurations commands by the configuration verifier layer (111) using the artificial intelligence (112) wherein the configurations layer not only checks a respective one of the one or more configurations commands itself, but also checks combinations of two or more configurations commands where each configurations command alone is harmless,
- requesting, using the artificial intelligence, a human authority via the configuration verifier layer and the user layer, if one or more configurations commands are malicious.

9. The method according to claim 8 wherein the artificial intelligence (112) is set up and configured to act on a given set of rules/parameters.

10. The method according to claim 9 wherein the rules are gained from configuration commands which have been executed in daily routine of operation and during routine maintenance of the network elements (101, 102, 103) and/or which have been identified beforehand as forbidden configuration commands and/orcritical configuration commands.

11. The method according to claim 9 or 10 wherein the one or more configurations commands are blocked and/or sent for verification via the user layer (105) to an administrator (130) if the one or more configurations commands violate at least one of the rules or if such violations exceed a pre-set limit.

12. The method according to any one of claims 9 to 11 wherein, if new configurations commands result in findings about potential attack scenarios, these new configurations commands are stored as rules.

13. A computer program product for a secure and valid configuration of network elements (101, 102, 103) of a communications network (100), the computer program product comprises computer executable codes stored on a computer-readable storage medium functionally coupled to at least one computing device and causes the at least one computing device to perform a computing process when in operation, the computing process comprises the steps of:
- providing a configuration verifier layer (111) which is installed and sandwiched between a user layer (105) and the network elements (101, 102, 103) of the communications network (100) and which is in communicative conjunction with the user layer (105) and configured to evaluate one or more configurations commands for the network elements (101, 102, 103) wherein the one or more configurations commands comprising known and new configurations commands,
- providing an artificial intelligence (112) which is in operative conjunction with and accessible to the configuration verifier layer (111), wherein the artificial intelligence (112) is based on machine learning wherein a data model is designed which corresponds to a basic configuration of the network elements (101, 102, 103) and which is dynamically trained by daily routine of operation and routine maintenance of the network elements (101, 102, 103) wherein the artificial intelligence is configured to decide whether a configurations command and/or a series of configurations commands is malicious or destructive or not, and to map a state of the communications network both before and after the respective configurations command and/or the series of configurations commands has been issued, in order to be able to make a decision based on a comparison between the state of the communications network before the respective configurations command and/or the respective series of configurations commands has been issued and the state of the communications network after the respective configurations command and/or the respective series of configurations commands has been issued,
- receiving the one or more configurations commands via the user layer (105), wherein the user layer comprises at least one human machine interface (130) and at least one machine-to-machine interface (140),
- evaluating the one or more configurations commands by the configuration verifier layer (111) using the artificial intelligence (112) wherein the configurations layer not only checks a respective one of the one or more configurations commands itself, but also checks combinations of two or more configurations commands where each configurations command alone is harmless,
- requesting, using the artificial intelligence, a human authority via the configuration verifier layer and the user layer, if one or more configurations commands are malicious.

## Patentansprüche

1. System (110) für eine sichere und gültige Konfiguration von Netzwerkelementen (101, 102, 103) eines Kommunikationsnetzwerks (100), wobei das System (110) eine künstliche Intelligenz (112) und mindestens eine Konfigurationsverifizierungsschicht (111) umfasst, die dazu konfiguriert ist, zwischen einer Benutzerschicht (105) des Kommunikationsnetzwerks (100) und den Netzwerkelementen (101, 102, 103) des Kommunikationsnetzwerks (100) installiert und eingebettet zu werden, und die dazu konfiguriert ist, einen oder mehrere Konfigurationsbefehle für die Netzwerkelemente (101, 102, 103) auszuwerten, wobei der eine oder die mehreren Konfigurationsbefehle über die Benutzerschicht (105) bereitgestellt werden und bekannte und neue Konfigurationsbefehle umfassen, wobei die Benutzerschicht mindestens eine Mensch-Maschine-Schnittstelle (130) und mindestens eine Maschine-zu-Maschine-Schnittstelle (140) umfasst, und wobei die Auswertung unter Verwendung der künstlichen Intelligenz (112) durchgeführt wird, die von mindestens einer Rechenvorrichtung implementiert und ausgeführt wird und in operativer Verbindung mit der Konfigurationsverifizierungsschicht (111) steht und für diese zugänglich ist, wobei die künstliche Intelligenz (112) auf maschinellem Lernen basiert, wobei ein Datenmodell entworfen wird, das einer Grundkonfiguration der Netzwerkelemente (101, 102, 103) entspricht und das durch die tägliche Betriebsroutine und die routinemäßige Wartung der Netzwerkelemente (101, 102, 103) dynamisch trainiert wird, wobei die künstliche Intelligenz dazu konfiguriert ist, zu entscheiden, ob ein Konfigurationsbefehl und/oder eine Reihe von Konfigurationsbefehlen böswillig oder destruktiv ist oder nicht, und einen Zustand des Kommunikationsnetzwerks abzubilden, sowohl bevor als auch nachdem der jeweilige Konfigurationsbefehl und/oder die Reihe von Konfigurationsbefehlen ausgegeben worden ist, um eine Entscheidung auf der Grundlage eines Vergleichs zwischen dem Zustand des Kommunikationsnetzes, bevor der jeweilige Konfigurationsbefehl und/oder die jeweilige Reihe von Konfigurationsbefehlen ausgegeben wurde, und dem Zustand des Kommunikationsnetzes, nachdem der jeweilige Konfigurationsbefehl und/oder die jeweilige Reihe von Konfigurationsbefehlen ausgegeben wurde, treffen zu können, wobei die Konfigurationsverifizierungsschicht (111) dazu konfiguriert ist, nicht nur einen entsprechenden der einen oder mehreren Konfigurationsbefehle selbst zu überprüfen, sondern auch Kombinationen von zwei oder mehr Konfigurationsbefehlen prüft, wobei jeder Konfigurationsbefehl für sich genommen unbedenklich ist, wobei die künstliche Intelligenz (112) automatisch eine menschliche Autorität über die Konfigurationsverifizierungsschicht und die Benutzerschicht anfordert, wenn ein oder mehrere Konfigurationsbefehle böswillig sind.

2. System nach Anspruch 1, wobei die künstliche Intelligenz (112) dazu eingerichtet und konfiguriert ist, auf der Grundlage eines gegebenen Satzes von Regeln/Parametern zu handeln, der in einer Datenbank gespeichert ist und aus dieser abgerufen werden kann.

3. System nach Anspruch 2, wobei die Regeln aus Konfigurationsbefehlen gewonnen werden, die in der täglichen Betriebsroutine und bei der routinemäßigen Wartung der Netzwerkelemente (101, 102, 103) ausgeführt worden sind und/oder die zuvor als verbotene Konfigurationsbefehle und/oder kritische Konfigurationsbefehle identifiziert worden sind.

4. System nach Anspruch 2 oder 3, wobei die Konfigurationsverifizierungsschicht (111) ferner dazu konfiguriert ist, mindestens einen der einen oder mehreren Konfigurationsbefehle zu blockieren und/oder zur Überprüfung über die Benutzerschicht (105) an einen Administrator (130) zu senden, wenn mindestens einer der einen oder mehreren Konfigurationsbefehle gegen mindestens eine der Regeln verstößt und/oder wenn ein solcher Verstoß einen voreingestellten Grenzwert überschreitet.

5. System nach einem der Ansprüche 2 bis 4, wobei, wenn ein oder mehrere neue Konfigurationsbefehle zu Erkenntnissen über mögliche Angriffsszenarien führen, diese ein oder mehreren neuen Konfigurationsbefehle auch als Regeln in der Datenbank gespeichert werden können.

6. System nach einem der vorhergehenden Ansprüche, wobei die künstliche Intelligenz (112) dazu konfiguriert ist, einen Netzwerkstatus der Netzwerkelemente (101, 102, 103) jederzeit unter Verwendung aktuell verfügbarer Daten anzuzeigen und zu analysieren, wobei eine isolierte Testplattform, die die Netzwerkelemente (101, 102, 103) und ihre Netzwerkumgebung simuliert, bereitgestellt wird und die ein oder mehreren Konfigurationsbefehle, die unter Verwendung der Benutzerschicht (105) bereitgestellt und empfangen wurden, zunächst auf der isolierten Testplattform ausgeführt werden, um ihre Auswirkung auf den Zustand der isolierten Testplattform zu bestimmen, und das Ergebnis an die Konfigurationsverifizierungsschicht (111) zurückgemeldet und optional für einen Administrator (130) über die Benutzerschicht (105) sichtbar gemacht wird.

7. System nach Anspruch 6, wobei die Testplattform in virtualisierter Form implementiert ist.

8. Computerimplementiertes Verfahren für eine sichere und gültige Konfiguration von Netzwerkelementen (101, 102, 103) eines Kommunikationsnetzwerks (100), wobei das Verfahren mindestens die folgenden Schritte umfasst:
- Bereitstellen einer Konfigurationsverifizierungsschicht (111), die zwischen einer Benutzerschicht (105) und den Netzwerkelementen (101, 102, 103) des Kommunikationsnetzwerks (100) installiert und eingebettet ist und die in kommunikativer Verbindung mit der Benutzerschicht (105) steht und dazu konfiguriert ist, einen oder mehrere Konfigurationsbefehle für die Netzwerkelemente (101, 102, 103) auszuwerten, wobei der eine oder die mehreren Konfigurationsbefehle bekannte und neue Konfigurationsbefehle umfassen,
- Bereitstellen einer künstlichen Intelligenz (112), die in operativer Verbindung mit der Konfigurationsverifizierungsschicht (111) steht und für diese zugänglich ist, wobei die künstliche Intelligenz (112) auf maschinellem Lernen basiert, wobei ein Datenmodell entworfen wird, das einer Basiskonfiguration der Netzwerkelemente (101, 102, 103) entspricht und das durch die tägliche Betriebsroutine und routinemäßige Wartung der Netzwerkelemente (101, 102, 103) dynamisch trainiert wird, wobei die künstliche Intelligenz dazu konfiguriert ist, zu entscheiden, ob ein Konfigurationsbefehl und/oder eine Reihe von Konfigurationsbefehlen böswillig oder destruktiv ist oder nicht, und einen Zustand des Kommunikationsnetzes abzubilden, sowohl bevor als auch nachdem der jeweilige Konfigurationsbefehl und/oder die Reihe von Konfigurationsbefehlen ausgegeben wurde, um eine Entscheidung auf der Grundlage eines Vergleichs zwischen dem Zustand des Kommunikationsnetzes, bevor der jeweilige Konfigurationsbefehl und/oder die jeweilige Reihe von Konfigurationsbefehlen ausgegeben wurde, und dem Zustand des Kommunikationsnetzes, nachdem der jeweilige Konfigurationsbefehl und/oder die jeweilige Reihe von Konfigurationsbefehlen ausgegeben wurde, treffen zu können,
- Bereitstellen und Empfangen des einen oder der mehreren Konfigurationsbefehle über die Benutzerschicht (105), wobei die Benutzerschicht mindestens eine Mensch-Maschine-Schnittstelle (130) und mindestens eine Maschine-zu-Maschine-Schnittstelle (140) umfasst,
- Auswerten des einen oder der mehreren Konfigurationsbefehle mittels der Konfigurationsverifizierungsschicht (111) unter Verwendung der künstlichen Intelligenz (112), wobei die Konfigurationsverifizierungsschicht nicht nur jeweils einen der einen oder mehreren Konfigurationsbefehle selbst prüft, sondern auch Kombinationen von zwei oder mehreren Konfigurationsbefehlen, bei denen jeder Konfigurationsbefehl für sich genommen unbedenklich ist,
- Anfordern einer menschlichen Autorität über die Konfigurationsverifizierungsschicht und die Benutzerschicht unter Verwendung der künstlichen Intelligenz, wenn ein oder mehrere Konfigurationsbefehle böswillig sind.

9. Verfahren nach Anspruch 8, wobei die künstliche Intelligenz (112) dazu eingerichtet und konfiguriert ist, auf der Grundlage eines gegebenen Satzes von Regeln/Parametern zu handeln.

10. Verfahren nach Anspruch 9, wobei die Regeln aus Konfigurationsbefehlen gewonnen werden, die in der täglichen Betriebsroutine und bei der routinemäßigen Wartung der Netzwerkelemente (101, 102, 103) ausgeführt worden sind und/oder die zuvor als verbotene Konfigurationsbefehle und/oder kritische Konfigurationsbefehle identifiziert worden sind.

11. Verfahren nach Anspruch 9 oder 10, wobei der eine oder die mehreren Konfigurationsbefehle blockiert und/oder zur Überprüfung über die Benutzerschicht (105) an einen Administrator (130) gesendet werden, wenn der eine oder die mehreren Konfigurationsbefehle gegen mindestens eine der Regeln verstoßen oder wenn solche Verstöße einen vorgegebenen Grenzwert überschreiten.

12. Verfahren nach einem der Ansprüche 9 bis 11, wobei, wenn neue Konfigurationsbefehle zu Erkenntnissen über mögliche Angriffsszenarien führen, diese neuen Konfigurationsbefehle als Regeln gespeichert werden.

13. Computerprogrammprodukt für eine sichere und gültige Konfiguration von Netzwerkelementen (101, 102, 103) eines Kommunikationsnetzwerks (100), wobei das Computerprogrammprodukt computerausführbare Codes umfasst, die auf einem computerlesbaren Speichermedium gespeichert sind, das funktional mit mindestens einer Rechenvorrichtung gekoppelt ist, und die mindestens eine Rechenvorrichtung dazu veranlasst, im Betrieb einen Rechenprozess durchzuführen, wobei der Rechenprozess die folgenden Schritte umfasst:
- Bereitstellen einer Konfigurationsverifizierungsschicht (111), die zwischen einer Benutzerschicht (105) und den Netzwerkelementen (101, 102, 103) des Kommunikationsnetzwerks (100) installiert und eingebettet ist und die in kommunikativer Verbindung mit der Benutzerschicht (105) steht und dazu konfiguriert ist, einen oder mehrere Konfigurationsbefehle für die Netzwerkelemente (101, 102, 103) auszuwerten, wobei der eine oder die mehreren Konfigurationsbefehle bekannte und neue Konfigurationsbefehle umfassen,
- Bereitstellen einer künstlichen Intelligenz (112), die in operativer Verbindung mit der Konfigurationsverifizierungsschicht (111) steht und für diese zugänglich ist, wobei die künstliche Intelligenz (112) auf maschinellem Lernen basiert, wobei ein Datenmodell entworfen wird, das einer Basiskonfiguration der Netzwerkelemente (101, 102, 103) entspricht und das durch die tägliche Betriebsroutine und routinemäßige Wartung der Netzwerkelemente (101, 102, 103) dynamisch trainiert wird, wobei die künstliche Intelligenz dazu konfiguriert ist, zu entscheiden, ob ein Konfigurationsbefehl und/oder eine Reihe von Konfigurationsbefehlen böswillig oder destruktiv ist oder nicht, und einen Zustand des Kommunikationsnetzes abzubilden, sowohl bevor als auch nachdem der jeweilige Konfigurationsbefehl und/oder die Reihe von Konfigurationsbefehlen ausgegeben wurde, um eine Entscheidung auf der Grundlage eines Vergleichs zwischen dem Zustand des Kommunikationsnetzes, bevor der jeweilige Konfigurationsbefehl und/oder die jeweilige Reihe von Konfigurationsbefehlen ausgegeben wurde, und dem Zustand des Kommunikationsnetzes, nachdem der jeweilige Konfigurationsbefehl und/oder die jeweilige Reihe von Konfigurationsbefehlen ausgegeben wurde, treffen zu können,
- Empfangen des einen oder der mehreren Konfigurationsbefehle über die Benutzerschicht (105), wobei die Benutzerschicht mindestens eine Mensch-Maschine-Schnittstelle (130) und mindestens eine Maschine-zu-Maschine-Schnittstelle (140) umfasst,
- Auswerten des einen oder der mehreren Konfigurationsbefehle mittels der Konfigurationsverifizierungsschicht (111) unter Verwendung der künstlichen Intelligenz (112), wobei die Konfigurationsverifizierungsschicht nicht nur jeweils einen der einen oder mehreren Konfigurationsbefehle selbst prüft, sondern auch Kombinationen von zwei oder mehreren Konfigurationsbefehlen, bei denen jeder Konfigurationsbefehl für sich genommen unbedenklich ist,
- Anfordern einer menschlichen Autorität über die Konfigurationsverifizierungsschicht und die Benutzerschicht unter Verwendung der künstlichen Intelligenz, wenn ein oder mehrere Konfigurationsbefehle böswillig sind.

## Revendications

1. Système (110) pour une configuration sécurisée et valide d'éléments de réseau (101, 102, 103) d'un réseau de communication (100), le système (110) comprenant une intelligence artificielle (112) et au moins une couche vérificateur de configuration (111) qui est configurée pour être installée et mise en sandwich entre une couche utilisateur (105) du réseau de communication (100) et les éléments de réseau (101, 102, 103) du réseau de communication (100) et qui est configurée pour évaluer une ou plusieurs commandes de configuration pour les éléments de réseau (101, 102, 103), les une ou plusieurs commandes de configuration étant fournies par l'intermédiaire de la couche utilisateur (105) et comprenant des commandes de configuration connues et nouvelles, la couche utilisateur comprenant au moins une interface humain-machine (130) et au moins une interface machine-machine (140) et l'évaluation étant effectuée à l'aide d'une intelligence artificielle (112) qui est mise en oeuvre et exécutée par au moins un dispositif informatique et en association opérationnelle avec la couche vérificateur de configuration (111) et accessible à celle-ci, l'intelligence artificielle (112) étant basée sur l'apprentissage machine, un modèle de données étant conçu et correspondant à une configuration de base des éléments de réseau (101, 102, 103) et étant entraîné dynamiquement par la routine quotidienne de fonctionnement et l'entretien de routine des éléments de réseau (101, 102, 103), l'intelligence artificielle étant configurée pour décider si une commande de configurations et/ou une série de commandes de configuration est malveillante ou destructrice ou non, et pour cartographier un état du réseau de communication à la fois avant et après l'envoi de la commande de configurations respective et/ou de la série de commandes de configuration, afin de pouvoir prendre une décision basée sur une comparaison de l'état du réseau de communication avant l'envoi de la commande de configurations respective et/ou de la série respective de commandes de configuration et de l'état du réseau de communication après l'envoi de la commande de configurations respective et/ou de la série respective des commandes de configuration, la couche vérificateur de configuration (111) étant configurée non seulement pour vérifier l'une respective des une ou plusieurs commandes de configuration, mais également pour vérifier les combinaisons de deux ou plusieurs commandes de configuration où chaque commande de configuration unique est inoffensive, l'intelligence artificielle (112) demandant automatiquement une autorité humaine par l'intermédiaire de la couche vérificateur de configuration et de la couche utilisateur si une ou plusieurs commandes de configuration sont malveillantes.

2. Système selon la revendication 1, l'intelligence artificielle (112) étant mise en place et configurée pour agir sur la base d'un ensemble donné de règles/paramètres qui est stocké dans une base de données et pouvant être récupéré de celle-ci.

3. Système selon la revendication 2, les règles provenant des commandes de configuration qui ont été exécutées pendant la routine quotidienne de fonctionnement et l'entretien de routine des éléments de réseau (101, 102, 103) et/ou qui ont été déterminées à l'avance comme étant des commandes de configuration interdites et/ou des commandes de configuration critiques.

4. Système selon la revendication 2 ou 3, la couche vérificateur de configuration (111) étant en outre configurée pour bloquer et/ou envoyer au moins une des une ou plusieurs commandes de configuration pour vérification par l'intermédiaire de la couche utilisateur (105) à un administrateur (130) si au moins une des une ou plusieurs commandes de configuration viole au moins une des règles et/ou si une telle violation dépasse la limite fixée.

5. Système selon l'une quelconque des revendications 2 à 4, dans lequel, si une ou plusieurs nouvelles commandes de configuration aboutissent à des conclusions sur des scénarios d'attaque potentiels, ces une ou plusieurs nouvelles commandes de configuration peuvent également être stockées en tant que règles dans la base de données.

6. Système selon l'une quelconque des revendications précédentes, l'intelligence artificielle (112) étant configurée pour afficher et analyser à tout moment un statut de réseau des éléments de réseau (101, 102, 103) à l'aide de données disponibles à l'instant, une plateforme d'essai isolée simulant les éléments de réseau (101, 102, 103) et son environnement de réseau étant fourni et les une ou plusieurs commandes de configuration qui ont été mises à disposition et reçues à l'aide de la couche utilisateur (105) étant initialement exécutées sur la plateforme d'essai isolée pour déterminer son effet sur l'état de cette dernière et le résultat étant rapporté à la couche vérificateur de configuration (111) et facultativement rendu visible à un administrateur (130) par l'intermédiaire de la couche utilisateur (105).

7. Système selon la revendication 6, la plateforme d'essai étant mise en oeuvre sous forme virtuelle.

8. Procédé mise en oeuvre par ordinateur pour une configuration sécurisée et valide d'éléments de réseau (101, 102, 103) d'un réseau de communication (100), le procédé comprenant au moins les étapes suivantes :
- fourniture d'une couche vérificateur de configuration (111) qui est installée et mise en sandwich entre une couche utilisateur (105) et les éléments de réseau (101, 102, 103) du réseau de communication (100) et qui est en association communicative avec la couche utilisateur (105) et configurée pour évaluer une ou plusieurs commandes de configuration pour les éléments de réseau (101, 102, 103), les une ou plusieurs commandes de configuration comprenant des commandes de configuration connues et nouvelles,
- fourniture d'une intelligence artificielle (112) qui est en association opérationnelle avec la couche vérificateur de configuration (111) et accessible à celle-ci, l'intelligence artificielle (112) étant basée sur l'apprentissage machine, un modèle de données étant conçu et correspondant à une configuration de base des éléments de réseau (101, 102, 103) et étant entraîné dynamiquement par la routine quotidienne de fonctionnement et l'entretien de routine des éléments de réseau (101, 102, 103), l'intelligence artificielle étant configurée pour décider si une commande de configurations et/ou une série de commandes de configuration est malveillante ou destructrice ou non, et pour cartographier un état du réseau de communication à la fois avant et après l'envoi de la commande de configurations respective et/ou de la série de commandes de configuration, afin de pouvoir prendre une décision basée sur une comparaison de l'état du réseau de communication avant l'envoi de la commande de configurations respective et/ou de la série respective de commandes de configuration et de l'état du réseau de communication après l'envoi de la commande de configurations respective et/ou de la série respective des commandes de configuration,
- fourniture et réception des une ou plusieurs commandes de configuration par l'intermédiaire de la couche utilisateur (105), la couche utilisateur comprenant au moins une interface humain-machine (130) et au moins une interface machine-machine (140),
- évaluation des une ou plusieurs commandes de configuration par la couche vérificateur de configuration (111) à l'aide de l'intelligence artificielle (112), la couche de configuration vérifiant non seulement une respective des une ou plusieurs commandes de configuration, mais également des combinaisons de deux commandes de configuration ou plus, chaque commande de configuration unique étant inoffensive,
- demande, à l'aide de l'intelligence artificielle, à une autorité humaine, par l'intermédiaire de la couche vérificateur de configuration et de la couche utilisateur, si une ou plusieurs commandes de configuration sont malveillantes.

9. Procédé selon la revendication 8, l'intelligence artificielle (112) étant mise en place et configurée pour agir sur la base d'un ensemble donné de règles/paramètres.

10. Procédé selon la revendication 9, les règles provenant des commandes de configuration qui ont été exécutées pendant la routine quotidienne de fonctionnement et l'entretien de routine des éléments de réseau (101, 102, 103) et/ou qui ont été déterminées à l'avance comme étant des commandes de configuration interdites et/ou des commandes de configuration critiques.

11. Procédé selon la revendication 9 ou 10, les une ou plusieurs commandes de configuration étant bloquées et/ou envoyées pour vérification par l'intermédiaire de la couche utilisateur (105) à un administrateur (130) si les une ou plusieurs commandes de configuration violent au moins une des règles ou si de telles violations dépassent la limite fixée.

12. Procédé selon l'une quelconque des revendications 9 à 11, dans lequel, si de nouvelles commandes de configuration aboutissent à des conclusions sur des scénarios d'attaque potentiels, ces nouvelles commandes de configuration sont stockées en tant que règles.

13. Produit de programme informatique pour une configuration sécurisée et valide d'éléments de réseau (101, 102, 103) d'un réseau de communication (100), le produit de programme informatique comprenant des codes exécutables par ordinateur stockés sur un support de stockage lisible par ordinateur fonctionnellement couplé à au moins un dispositif informatique et amenant le au moins un dispositif informatique à effectuer un processus informatique lorsqu'il est en fonctionnement, le processus informatique comprenant les étapes de :
- fourniture d'une couche vérificateur de configuration (111) qui est installée et mise en sandwich entre une couche utilisateur (105) et les éléments de réseau (101, 102, 103) du réseau de communication (100) et qui est en association communicative avec la couche utilisateur (105) et configurée pour évaluer une ou plusieurs commandes de configuration pour les éléments de réseau (101, 102, 103), les une ou plusieurs commandes de configuration comprenant des commandes de configuration connues et nouvelles,
- fourniture d'une intelligence artificielle (112) qui est en association opérationnelle avec la couche vérificateur de configuration (111) et accessible à celle-ci, l'intelligence artificielle (112) étant basée sur l'apprentissage machine, un modèle de données étant conçu et correspondant à une configuration de base des éléments de réseau (101, 102, 103) et étant entraîné dynamiquement par la routine quotidienne de fonctionnement et l'entretien de routine des éléments de réseau (101, 102, 103), l'intelligence artificielle étant configurée pour décider si une commande de configurations et/ou une série de commandes de configuration est malveillante ou destructrice ou non, et pour cartographier un état du réseau de communication à la fois avant et après l'envoi de la commande de configurations respective et/ou de la série de commandes de configuration, afin de pouvoir prendre une décision basée sur une comparaison de l'état du réseau de communication avant l'envoi de la commande de configurations respective et/ou de la série respective de commandes de configuration et de l'état du réseau de communication après l'envoi de la commande de configurations respective et/ou de la série respective des commandes de configuration,
- réception des une ou plusieurs commandes de configuration par l'intermédiaire de la couche utilisateur (105), la couche utilisateur comprenant au moins une interface humain-machine (130) et au moins une interface machine-machine (140),
- évaluation des une ou plusieurs commandes de configuration par la couche vérificateur de configuration (111) à l'aide de l'intelligence artificielle (112), la couche de configuration vérifiant non seulement une respective des une ou plusieurs commandes de configuration, mais également des combinaisons de deux commandes de configuration ou plus, chaque commande de configuration unique étant inoffensive,
- demande, à l'aide de l'intelligence artificielle, à une autorité humaine, par l'intermédiaire de la couche vérificateur de configuration et de la couche utilisateur, si une ou plusieurs commandes de configuration sont malveillantes.
